(19) **Europäisches Patentamt / European Patent Office / Office européen des brevets**

(11) **EP 3 086 603 A1**

(12) # EUROPEAN PATENT APPLICATION
published in accordance with Art. 153(4) EPC

(43) Date of publication:
26.10.2016 Bulletin 2016/43

(51) Int Cl.:
*H04W 48/18* (2009.01)    *H04W 48/16* (2009.01)
*H04W 48/20* (2009.01)    *H04W 88/06* (2009.01)

(21) Application number: 14871714.3

(22) Date of filing: 18.12.2014

(86) International application number:
PCT/JP2014/083573

(87) International publication number:
WO 2015/093569 (25.06.2015 Gazette 2015/25)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 20.12.2013 JP 2013264612

(71) Applicant: Kyocera Corporation
Kyoto-shi
Kyoto 612-8501 (JP)

(72) Inventors:
• FUJISHIRO, Masato
Kyoto-shi
Kyoto 612-8501 (JP)
• NAGASAKA, Yushi
Kyoto-shi
Kyoto 612-8501 (JP)

(74) Representative: Schwabe - Sandmair - Marx
Patentanwälte Rechtsanwalt
Partnerschaft mbB
Joseph-Wild-Straße 20
81829 München (DE)

(54) **COMMUNICATION CONTROL METHOD**

(57) A communication control method according to one embodiment is used in a communication system in which an access network for accommodating a traffic of a user terminal is capable of being selected. The method comprises the steps of: (A) receiving, by the user terminal, identification information indicating a predetermined wireless LAN from a cellular RAN; and (B) prioritizing, by the user terminal, the predetermined wireless LAN indicated by the identification information, as a connection target used after selecting the access network. In the (B), when the predetermined wireless LAN is not a wireless LAN preferred by a user of the user terminal, the user terminal prioritizes the wireless LAN preferred by the user over the predetermined wireless LAN.

FIG. 9

EP 3 086 603 A1

**Description**

**TECHNICAL FIELD**

The present invention relates to a communication control method used in a cellular communication system capable of cooperating with a wireless LAN system.

**BACKGROUND ART**

In recent years, a user terminal (that is a dual terminal) having cellular communication and wireless LAN (Local Area Network) communication is increasingly becoming popular. Further, the number of wireless LAN access points managed by an operator of a cellular communication system increases.

Therefore, in 3GPP (3rd Generation Partnership Project) which is a project aiming to standardize a cellular communication system, a technology is being considered which is capable of strengthening cooperation between a cellular RAN (Radio Access Network) and a wireless LAN (see Non Patent Literature 1).

For example, when a traffic of a user terminal accommodated in a cellular RAN (cellular access network) is switched so that the traffic is now accommodated in a wireless LAN (wireless LAN access network), it is possible to reduce the traffic load in the cellular RAN (offload).

**CITATION LIST**

**NON PATENT LITERATURE**

[NPL 1] 3GPP technical report "TR 37.834 V1.0.0" August, 2013

**SUMMARY**

However, when an access network for accommodating a traffic of a user terminal is selected, a connection target appropriate for the user terminal (user) may not necessarily be selected.

Therefore, an object of the present invention is to provide a communication control method with which it is possible to select an appropriate connection target when an access network for accommodating a traffic of a user terminal is selected.

**SOLUTION TO PROBLEM**

A communication control method according to one embodiment is used in a communication system in which an access network for accommodating a traffic of a user terminal is capable of being selected. The method comprises the steps of: (A) receiving, by the user terminal, identification information indicating a predetermined wireless LAN from a cellular RAN; and (B) prioritizing, by the user terminal, the predetermined wireless LAN indicated by the identification information, as a connection target used after selecting the access network. In the (B), when the predetermined wireless LAN is not a wireless LAN preferred by a user of the user terminal, the user terminal prioritizes the wireless LAN preferred by the user over the predetermined wireless LAN.

**BRIEF DESCRIPTION OF DRAWINGS**

Fig. 1 is a system configuration diagram according to a first embodiment.
Fig. 2 is a block diagram of a UE 100.
Fig. 3 is a block diagram of an eNB 200.
Fig. 4 is a block diagram of an AP 300.
Fig. 5 is a protocol stack diagram of a radio interface in a cellular communication system.
Fig. 6 is a diagram for describing an operation environment according to an embodiment.
Fig. 7 is an operation sequence chart according to the first embodiment.
Fig. 8 is a flowchart for describing prioritizing of a WLAN 30 according to the first embodiment.
Fig. 9 is a sequence diagram for describing an operation sequence 1 according to a second embodiment.

Fig. 10 is a sequence diagram for describing an operation sequence 2 according to the second embodiment.
Fig. 11 is a sequence diagram for describing an operation sequence 3 according to the second embodiment.
Fig. 12 is a sequence diagram for describing an operation sequence 4 according to the second embodiment.
Fig. 13 is a flowchart for selecting the AP 300 included by the UE 100 in a WLAN measurement report.

**DESCRIPTION OF EMBODIMENTS**

[Overview of Embodiments]

A communication control method according to a first embodiment is used in a communication system in which an access network for accommodating a traffic of a user terminal is capable of being selected. The method comprises the steps of: (A) receiving, by the user terminal, identification information indicating a predetermined wireless LAN from a cellular RAN; and (B) prioritizing, by the user terminal, the predetermined wireless LAN indicated by the identification information, as a connection target used after selecting the access network. In the (B), when the predetermined wireless LAN is not a wireless LAN preferred by a user of the user terminal, the user terminal prioritizes the wireless LAN preferred by the user over the predetermined wireless LAN.

The communication control method according to the first embodiment further comprise: receiving, by the user terminal, from the cellular RAN, a selection parameter by which a wireless LAN estimated to be preferred by the user is prioritized over a wireless LAN assumed not to be preferred by the user. In the (B), the user terminal prioritizes, on the basis of the selection parameter, the wireless LAN preferred by the user.

The communication control method according to the first embodiment further comprises starting an operation for selecting the access network, when the user terminal determines on the basis of the selection parameter that it is preferable that a wireless LAN other than the wireless LAN preferred by the user is selected as the connection target.

In the first embodiment, the user terminal omits the (B) when connecting with the wireless LAN preferred by the user.

In the first embodiment, the selection parameter is a value by which it is not possible to select, as the connection target, the wireless LAN not preferred by the user.

In the first, the wireless LAN preferred by the user is a wireless LAN not managed by an operator. The wireless LAN not preferred by the user is a wireless LAN managed by an operator.

A communication control method according to a first embodiment is used in a communication system in which an access network for accommodating a traffic of a user terminal is capable of being selected. The method comprises selecting on the basis of a selection rule for an accommodation network, by the user terminal, the access network to switch a connection target in order to accommodate a traffic of the user terminal to the selected access network. In the selecting, when connecting with a wireless LAN preferred by a user, the user terminal prioritizes the connection with the wireless LAN preferred by the user over the switching of the connection target.

A communication control method according to a first embodiment is used in a communication system in which an access network for accommodating a traffic of a user terminal is capable of being selected. The method comprises the steps of: (A) receiving, by the user terminal, identification information indicating a predetermined wireless LAN from a cellular LAN; and (B) setting, by the user terminal, the predetermined wireless LAN indicated by the identification information, to a candidate connection target used after selecting the access network. In the (B), the user terminal eliminates, on the basis of a user preference, the predetermined wireless LAN from the candidate connection target used after selecting the access network.

The communication control method according to the first embodiment further comprises registering information indicating the user preference into the user terminal. In the (B), when the user terminal determines on the basis of the information indicating the registered user preference that the predetermined wireless LAN is the wireless LAN not preferred by the user, the predetermined wireless LAN is eliminated from the candidate connection target.

In the first embodiment, in the (B), the user terminal includes, on the basis of the user preference, another wireless LAN different from the predetermined wireless LAN into the candidate connection target.

In the first embodiment, the user preference indicates that a wireless LAN not managed by an operator is prioritized over a wireless LAN managed by an operator.

A communication control method according to a second embodiment is used in a communication system in which an access network for accommodating a traffic of a user terminal is capable of being selected. The method comprises the steps of: acquiring, by the user terminal, a predetermined parameter from a wireless LAN; and transmitting, by the user terminal, a report on the acquired predetermined parameter, to the cellular RAN. In the transmitting, the user terminal includes a priority of the wireless LAN decided on the basis of a user preference, into the report.

A communication control method according to a second embodiment is used in a communication system in which an access network for accommodating a traffic of a user terminal is capable of being selected. The method comprises the steps of: receiving, by the user terminal, identification information indicating a predetermined wireless LAN from the cellular RAN; and transmitting, by the user terminal, a report on a predetermined parameter acquired from the predetermined wireless LAN, to the cellular RAN. In the transmitting, the user terminal includes information on a predetermined parameter acquired from another wireless LAN different from the predetermined wireless LAN into the report.

A communication control method according to a second embodiment is used in a communication system in which an access network for accommodating a traffic of a user terminal is capable of being selected. The method comprises the steps of: measuring, by the user terminal, a radio signal from a plurality of wireless LANs; and transmitting, by the user terminal, a report on a measurement result to the cellular RAN, when the measurement result of the radio signal from at least one wireless LAN out of the plurality of wireless LANs satisfies a predetermined condition. In the transmitting, the user terminal includes, into the report, not only the measurement result of the radio signal that satisfies the predetermined condition but also the measurement result of the radio signal that does not satisfy the predetermined condition, and transmits the report.

In the second embodiment, in the transmitting, the user terminal includes all measurement results of the plurality of wireless LANs, into the report.

A communication control method according to a second embodiment is used in a communication system in which an access network for accommodating a traffic of a user terminal is capable of being selected. The method comprises the steps of: receiving, by the user terminal, identification information indicating a wireless LAN from a cellular RAN or an ANDSF (Access Network Discovery and Selection Function) server; measuring, by the user terminal, a radio signal from a predetermined wireless LAN; and transmitting, by the user terminal, a report on a measurement result of the radio signal from the predetermined wireless LAN, to the cellular RAN. In the transmitting, the user terminal does not transmit the report when the predetermined wireless LAN does not match the wireless LAN indicated by the identification information.

[First Embodiment]

With reference to the drawing, an embodiment will be described in which a cellular communication system (LTE system) configured to comply with the 3GPP standards is cooperated with a wireless LAN (WLAN) system, below.

(System Configuration)

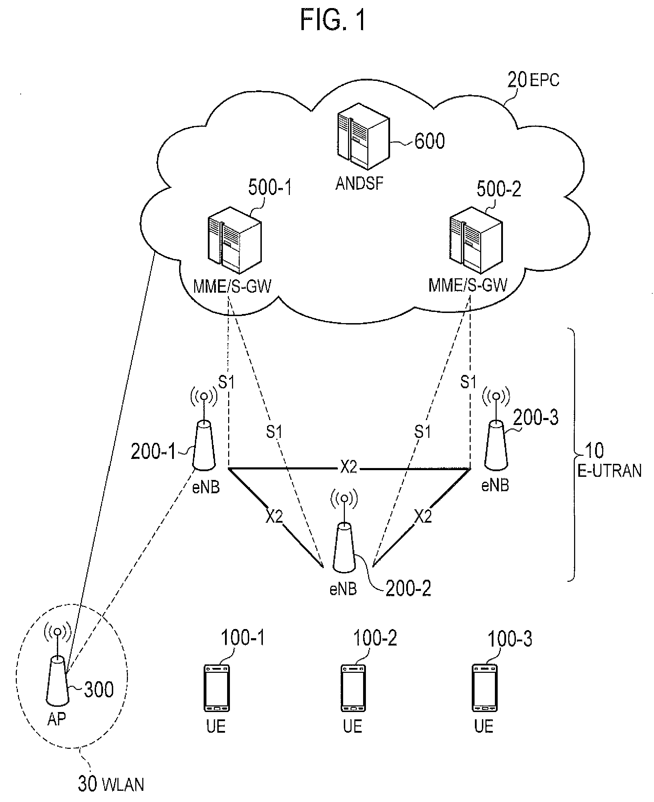

FIG. 1 is a system configuration diagram according to a first embodiment. As shown in FIG. 1, the cellular system includes a plurality of UEs (User Equipments) 100, E-UTRAN (Evolved Universal Terrestrial Radio Access Network) 10, and EPC (Evolved Packet Core) 20.

The E-UTRAN 10 corresponds to a cellular RAN. The EPC 20 corresponds to a core network. The E-UTRAN 10 and the EPC 20 configure a network of the cellular communication system.

The UE 100 is a mobile radio communication device and performs radio communication with a cell with which a connection is established. The UE 100 corresponds to the user terminal. The UE 100 is a terminal (dual terminal) that supports both cellular communication scheme and WLAN communication scheme.

The E-UTRAN 10 includes a plurality of eNBs 200 (evolved Node-Bs). The eNB 200 corresponds to a cellular base station. The eNB 200 manages one or a plurality of cells and performs radio communication with the UE 100 which establishes a connection with the cell of the eNB 200. It is noted that the "cell" is used as a term indicating a minimum unit of a radio communication area, and is also used as a term indicating a function of performing radio communication with the UE 100. Further, for example, the eNB 200 has a radio resource management (RRM) function, a routing function of user data, and a measurement control function for mobility control and scheduling.

The eNBs 200 are connected mutually via an X2 interface. Further, the eNB 200 is connected to MME (Mobility Management Entity)/S-GW (Serving-Gateway) 500 included in the EPC 20 via an S1 interface.

The EPC 20 includes a plurality of MME/S-GWs 500. The MME is a network node for performing various mobility controls, for example, for the UE 100, and corresponds to a controller. The S-GW is a network node that performs transfer control of user data and corresponds to a mobile switching center.

WLAN 30 includes a WLAN access point (hereinafter, briefly referred to as "AP") 300. The AP 300 is an AP (Operator controlled AP) managed by an operator of a cellular communication system, for example.

The WLAN 30 is configured in accordance with standards of IEEE 802.11, for example. The AP 300 performs communication with the UE 100 in a frequency band (WLAN frequency band) different from a cellular frequency band. The AP 300 is connected, via a router, etc., to the EPC 20.

Further, in addition to a case where the eNB 200 and the AP 300 are individually located, the eNB 200 and the AP 300 may also be "Collocated". As one mode of the "Collocated", the eNB 200 and the AP 300 may be directly connected to each other through any interface of an operator.

The EPC 20 further includes an ANDSF (Access Network Discovery and Selection Function) server 600. The ANDSF server 600 manages ANDSF information on the WLAN 30. The ANDSF server 600 provides the UE 100 with the ANDSF information on the WLAN 30, by an NAS (Non Access Stratum) message.

It is noted that the ANDSF server 600 utilized by the UE 100 in an H-PLMN (Home Public Land Mobile Network) is called an H-ANDSF server. The ANDSF server 600 utilized, during roaming, by the UE 100 in V-PLMN (Visited Public Land Mobile Network) is called a V-ANDSF server.

Next, configurations of the UE 100, the eNB 200, and the AP 300 will be described.

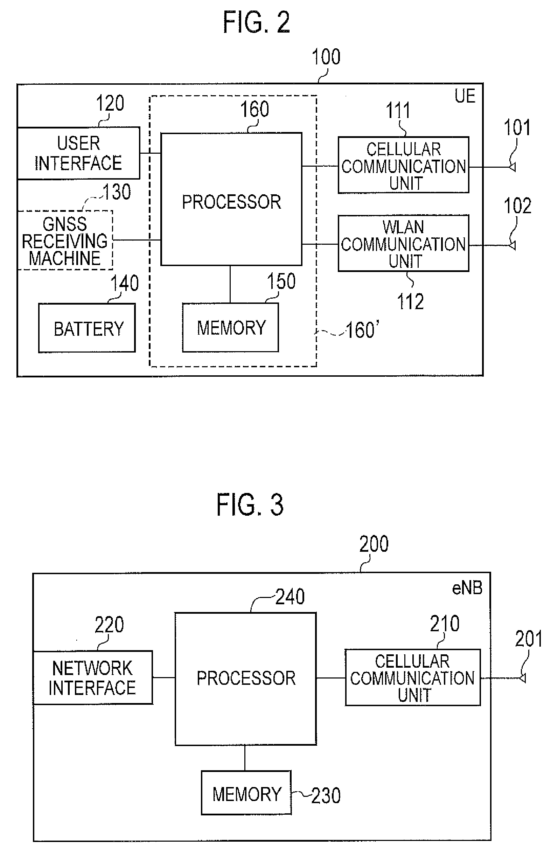

FIG. 2 is a block diagram of the UE 100. As shown in FIG. 2, the UE 100 includes: antennas 101 and 102; a cellular communication unit 111; a WLAN communication unit 112; a user interface 120; a GNSS (Global Navigation Satellite System) receiver 130; a battery 140; a memory 150; and a processor 160. The memory 150 and the processor 160 configure a control unit. The UE 100 may not have the GNSS receiver 130. It is noted that the memory 150 may be integrally formed with the processor 160, and this set (that is, a chipset) may be called a processor 160'.

The antenna 101 and the cellular communication unit 111 are used for transmitting and receiving a cellular radio signal. The cellular communication unit 111 converts a baseband signal output from the processor 160 into the cellular radio signal, and transmits the same from the antenna 101. Further, the cellular communication unit 111 converts the cellular radio signal received by the antenna 101 into the baseband signal, and outputs the same to the processor 160.

The antenna 102 and the WLAN communication unit 112 are used for transmitting and receiving a WLAN radio signal. The WLAN communication unit 112 converts the baseband signal output from the processor 160 into a WLAN radio signal, and transmits the same from the antenna 102. Further, the WLAN communication unit 112 converts the WLAN radio signal received by the antenna 102 into a baseband signal, and outputs the same to the processor 160.

The user interface 120 is an interface with a user carrying the UE 100, and includes, for example, a display, a microphone, a speaker, and various buttons. Upon receipt of the input from a user, the user interface 120 outputs a signal indicating a content of the input to the processor 160. The GNSS receiver 130 receives a GNSS signal in order to obtain location information indicating a geographical location of the UE 100, and outputs the received signal to the processor 160. The battery 140 accumulates a power to be supplied to each block of the UE 100.

The memory 150 stores a program to be executed by the processor 160 and information to be used for a process by the processor 160. The processor 160 includes the baseband processor that performs modulation and demodulation, and encoding and decoding on the baseband signal and a CPU that performs various processes by executing the program stored in the memory 150. The processor 160 may further include a codec that performs encoding and decoding on sound and video signals. The processor 160 executes various processes and various communication protocols described later.

FIG. 3 is a block diagram of the eNB 200. As shown in FIG. 3, the eNB 200 includes an antenna 201, a cellular communication unit 210, a network interface 220, a memory 230, and a processor 240. The memory 230 and the processor 240 configure a control unit. It is noted that the memory 230 may be integrally formed with the processor 240, and this set (that is, a chipset) may be called a processor.

The antenna 201 and the cellular communication unit 210 are used for transmitting and receiving a cellular radio signal. The cellular communication unit 210 converts the baseband signal output from the processor 240 into the cellular radio signal, and transmits the same from the antenna 201. Furthermore, the cellular communication unit 210 converts the cellular radio signal received by the antenna 201 into the baseband signal, and outputs the same to the processor 240.

The network interface 220 is connected to the neighboring eNB 200 via an X2 interface and is connected to the MME/S-GW 500 via the S1 interface. Further, the network interface 220 is used for communication with the AP 300 via the EPC 20.

The memory 230 stores a program to be executed by the processor 240 and information to be used for a process by the processor 240. The processor 240 includes the baseband processor that performs modulation and demodulation, encoding and decoding and the like on the baseband signal and a CPU that performs various processes by executing the program stored in the memory 230. The processor 240 implements various processes and various communication protocols described later.

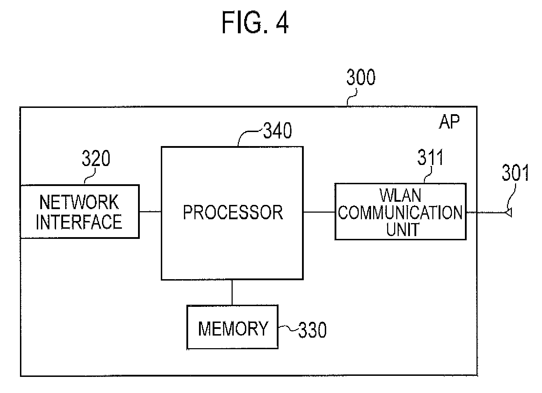

Fig. 4 is a block diagram of the AP 300. As shown in Fig. 4, the AP 300 includes an antenna 301, a WLAN communication unit 311, a network interface 320, a memory 330, and a processor 340.

The antenna 301 and the WLAN communication unit 311 are used for transmitting and receiving a WLAN radio signal. The WLAN communication unit 311 converts a baseband signal output from the processor 340 into a WLAN radio signal and transmits the same from the antenna 301. Further, the WLAN communication unit 311 converts the WLAN radio signal received by the antenna 301 into the baseband signal and outputs the same to the processor 340.

The network interface 320 is connected to the EPC 20 via a router, etc. Further, the network interface 320 is used for communication with the eNB 200 via the EPC 20.

The memory 330 stores a program to be executed by the processor 340 and information to be used for a process by the processor 340. The processor 340 includes a baseband processor that performs modulation and demodulation, encoding and decoding, and the like on a baseband signal and a CPU that performs various processes by executing a program stored in the memory 330.

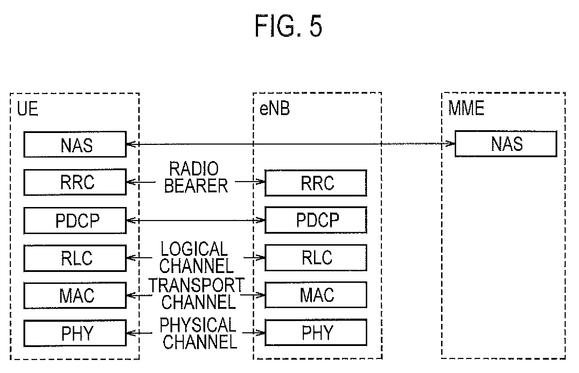

FIG. 5 is a protocol stack diagram of a radio interface in the cellular system. As shown in FIG. 5, the radio interface protocol is classified into a layer 1 to a layer 3 of an OSI reference model, wherein the layer 1 is a physical (PHY) layer. The layer 2 includes a MAC (Media Access Control) layer, an RLC (Radio Link Control) layer, and a PDCP (Packet Data Convergence Protocol) layer. The layer 3 includes an RRC (Radio Resource Control) layer.

The PHY layer performs encoding and decoding, modulation and demodulation, antenna mapping and demapping, and resource mapping and demapping. Between the PHY layer of the UE 100 and the PHY layer of the eNB 200, user data and a control signal are transmitted via the physical channel.

The MAC layer performs priority control of data, and a retransmission process and the like by hybrid ARQ (HARQ). Between the MAC layer of the UE 100 and the MAC layer of the eNB 200, data are transmitted via a transport channel. The MAC layer of the eNB 200 includes a scheduler for selecting a transport format (a transport block size, a modulation and coding scheme and the like) of an uplink and a downlink, and an allocated resource block.

The RLC layer transmits data to an RLC layer of a reception side by using the functions of the MAC layer and the PHY layer. Between the RLC layer of the UE 100 and the RLC layer of the eNB 200, data is transmitted via a logical channel.

The PDCP layer performs header compression and decompression, and encryption and decryption.

The RRC layer is defined only in a control plane handling a control signal. Between the RRC layer of the UE 100 and the RRC layer of the eNB 200, the control signal (an RRC message) for various types of setting is transmitted. The RRC layer controls the logical channel, the transport channel, and the physical channel in response to establishment, re-establishment, and release of a radio bearer. When there is a connection (RRC connection) between the RRC of the UE 100 and the RRC of the eNB 200, the UE 100 is in a connected state of cellular communication (RRC connected state), otherwise, the UE 100 is in a connected state of cellular communication (RRC idle state).

An NAS layer located above the RRC layer performs session management, mobility management, and the like. The MME 300 and the ANDSF server 600 exchange an NAS message with the UE 100.

(Operation overview)

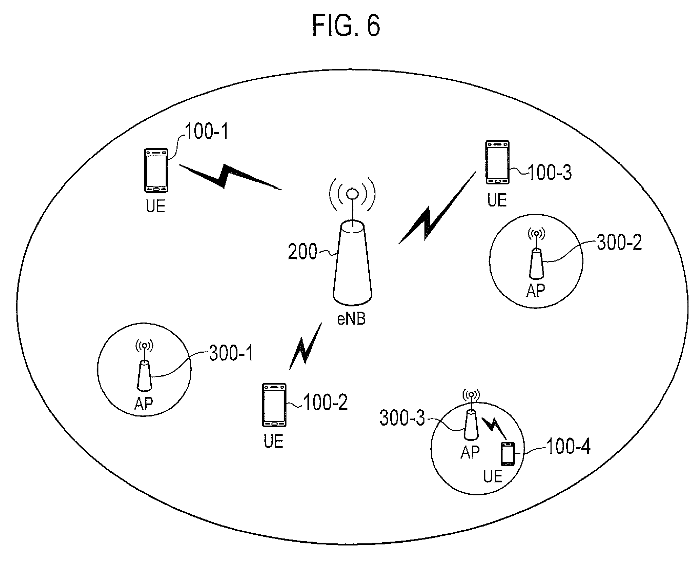

Fig. 6 is a diagram for describing an operation environment according to the embodiment. As shown in Fig. 6, a plurality of APs 300 are provided in a coverage of a cell of the eNB 200. Furthermore, a plurality of UEs 100 exist in the coverage of a cell of the eNB 200. The UE 100 establishes a connection with the eNB 200, and performs cellular communication with the eNB 200. Specifically, the UE 100 exchanges a cellular radio signal including a traffic (user data) with the eNB 200.

In such an operation environment, when a traffic steering is used where switching is made so that the traffic of the UE 100 accommodated in the eNB 200 (E-UTRAN 10) is accommodated in the AP 300 (WLAN 30), a traffic load in the eNB 200 can be reduced (offload). The traffic steering includes a case where a connection target of the UE 100 is switched between the eNB 200 and the AP 300 and a case where a data path is switched between the eNB 200 and the AP 300 while the UE 100 is connected with both the eNB 200 and the AP 300.

Further, as a network selection scheme for selecting, from the E-UTRAN 10 and the WLAN 30, an access network for accommodating the traffic of the UE 100 (hereinafter, referred to as "accommodation network"), there are a plurality of network selection schemes.

The plurality of network selection schemes differ in subject that decides the accommodation network. For example, the plurality of network selection schemes include a scheme in which the authority to decide the accommodation network is held by the UE 100 and a scheme in which the authority to decide the accommodation network is held by the E-UTRAN 10.

Alternatively, the plurality of network selection schemes differ in scheme of providing a selection rule for the accommodation network. For example, the plurality of network selection schemes include a scheme of providing the selection rule for the accommodation network from only the ANDSF server 600, and a scheme capable of providing the selection rule for the accommodation network on the basis of a rule designed in a specification in the 3GPP RAN.

In the embodiment, out of the network selection schemes, a network selection scheme involving the E-UTRAN 10 (hereinafter, referred to as "RAN Solution") will be mainly discussed.

RAN Solution 1 is a scheme in which the selection rule for the accommodation network is provided only from the ANDSF server 600 and the authority to decide the accommodation network belongs to the UE 100. The E-UTRAN 10 provides the UE 100 with auxiliary information (such as a selection parameter).

RAN Solution 2 is a scheme in which the selection rule for the accommodation network is capable of being provided on the basis of a rule designed in a specification in the 3GPP RAN and the authority to decide the accommodation network is held by the UE 100. It is noted that it is possible to provide the selection rule for the accommodation network also from the ANDSF server 600.

RAN Solution 3 is a scheme in which the authority to decide the accommodation network is held by the E-UTRAN 10 unlike the RAN Solutions 1 and 2. In the RAN Solution 3, the E-UTRAN 10 decides the accommodation network in much the same procedure as a handover procedure of the LTE system.

In the embodiment, the UE 100 holds a preference list about the WLAN 30 preferred by the user (user preference). In the preference list, information indicating the WLAN 30 preferred by the user (an identifier of the WLAN 30 preferred by the user, for example) is registered. In the preference list, information indicating the WLAN 30 not preferred by the user may be registered.

The UE 100 may register the information indicating the WLAN 30 input by a user operation and preferred by the user, into the preference list, and when the user inputs an address of a predetermined server, the information indicating the WLAN 30 acquired from the predetermined server and preferred by the user may be registered into the preference list.

The WLAN 30 preferred by the user is the AP 300 not managed by an operator, for example, and specifically, a home AP managed by the user. On the other hand, the WLAN 30 not preferred by the user is the AP 300 managed by the operator, for example.

In the present embodiment, the RAN Solution 1 and the RAN Solution 2 will be described.

(Operation specific example)

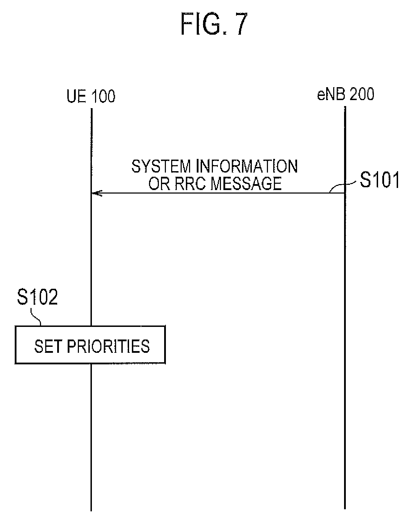

Fig. 7 is an operation sequence chart according to the first embodiment.

As shown in Fig. 7, in step S101, the eNB 200 uses system information or an RRC message to transmit WLAN control information on the WLAN 30, to the UE 100.

The WLAN control information includes at least one of an identifier indicating the WLAN 30, and a selection parameter by which the WLAN 30 estimated to be preferred by the user is preferentially selected over the WLAN 30 assumed not to be preferred by the user. The identifier indicating the WLAN 30 is an identifier indicating the WLAN 30 designated from the cellular RAN.

In step S102, the UE 100 performs to prioritize the WLAN 30.

The UE 100 performs measurement for receiving a signal (a beacon signal, for example) from a surrounding AP 300. Next, the UE 100 acquires the WLAN parameter, on the basis of the signal from the AP 300. The WLAN parameter includes a reception level of the signal (an RSSI, for example) from the AP 300, information on the AP 300 (load status of the AP 300, for example) (Load status) included in the signal from the AP 300, a channel utilization rate (ChannelUtilization) of the AP 300, a transmission rate of a WLAN backhaul (BackhaulRateDI) available in a downlink, and a transmission rate of a WLAN backhaul (BackhaulRateUI) available in an uplink. It is noted that the above-described load status, channel utilization rate, and transmission rate of the WLAN backhaul may be included in the beacon signal.

When the identifier of the WLAN 30 included in the WLAN control information is the identifier of the WLAN 30 preferred by the user, the UE 100 prioritizes the WLAN 30 included in the WLAN control information. On the other hand, when the identifier of the WLAN 30 included in the WLAN control information is not the identifier of the WLAN 30 preferred by the user, another WLAN 30 preferred by the user is prioritized.

Specifically, it is possible to prioritize the WLAN 30 by any one of the following methods.

Firstly, the UE 100 prioritizes the WLAN 30 without using the selection parameter. Specifically, the UE 100 applies the following priorities, for example, to the WLAN 30 that satisfies the following conditions, from the APs 300 capable of receiving the signal. It is noted that the greater the ordinal number of the priority, the higher the priority; a first priority is the highest and a fourth priority is the lowest.

"First priority": the WLAN 30 preferred by the user and the WLAN 30 included in the WLAN control information

"Second priority": the WLAN 30 preferred by the user and the WLAN 30 not included in the WLAN control information

"Third priority": the WLAN 30 not preferred by the user and the WLAN 30 included in the WLAN control information

"Fourth priority": the WLAN 30 not preferred by the user and the WLAN 30 not included in the WLAN control information

The UE 100 decides, as the accommodation network, the WLAN 30 having a high priority, for example. Thus, when the WLAN 30 included in the WLAN control information (hereinafter, referred to as "designated WLAN 30", where appropriate) is not the WLAN 30 preferred by the user, the UE 100 prioritizes the WLAN 30 preferred by the user over the WLAN 30 included in the WLAN control information. That is, the UE 100 lowers the priority of the designated WLAN 30, on the basis of a user preference. As a result, when the accommodation network is selected, the user preference is taken into consideration, and thus, it is possible to select the appropriate WLAN 30.

It is noted that when the priorities of a plurality of WLANs 30 are the same, it is possible to apply the prioritization on the basis of the acquired WLAN parameter.

Further, the UE 100 may start an operation for deciding the accommodation network, for the WLAN 30 having a predetermined priority or higher, for example. The operation for deciding the accommodation network is an operation for deciding the accommodation network or an operation of obtaining the WLAN parameter in order to decide the

**EP 3 086 603 A1**

accommodation network. For example, when acquiring only a part of the WLAN parameters (an RSSI, for example), the UE 100 acquires another WLAN parameter (load status, for example).

When the UE 100 performs the operation for deciding the accommodation network on the WLAN 30 having the "first priority" and the "second priority", for example, the designated WLAN 30 having the "third priority" and not preferred by the user is eliminated from the target WLAN 30. Therefore, the UE 100 disregards the WLAN 30 designated from the cellular RAN. On the other hand, the UE 100 includes, as the target WLAN 30, the WLAN 30 preferred by the user rather than the designated WLAN 30 having the "second priority". Thus, when the accommodation network is selected, the user preference is taken into consideration, and thus, it is possible to select the appropriate WLAN 30.

Secondly, the UE 100 prioritizes the WLAN 30 on the basis of the selection parameter. Specifically, the UE 100 uses at least either one of the following formulae (1) to (10) that are the selection rules for the accommodation network, on the basis of an offset value ($\alpha$) and/or a threshold value ($\beta$) that is the selection parameter so as to select the WLAN 30:

$$\text{- (RSSI of operator WLAN)} > \text{(RSSI of preferred WLAN)} + \alpha[dB] \quad \text{---} \quad \text{(Formula 1)}$$

$$\text{- (RSSI of operator WLAN)} > \beta[dBm] \quad \text{---} \quad \text{(Formula 2)}$$

$$\text{- (Load status of operator WLAN)} > \text{(Load status of preferred WLAN)} + \alpha[\%] \quad \text{---} \quad \text{(Formula 3)}$$

$$\text{- (Load status of operator WLAN)} > \beta[\%] \quad \text{---} \quad \text{(Formula 4)}$$

$$\text{- (ChannelUtilization of operator WLAN)} < \text{(ChannelUtilization of preferred WLAN)} + \alpha[BSS\ load] \quad \text{---} \quad \text{(Formula 5)}$$

$$\text{- (ChannelUtilization of operator WLAN)} < \beta[BSS\ load] \quad \text{---} \quad \text{(Formula 6)}$$

$$\text{- (BackhaulRateDl of operator WLAN)} > \text{(BackhaulRateDl of preferred WLAN)} + \alpha \quad \text{---} \quad \text{(Formula 7)}$$

$$\text{- (BackhaulRateDl of operator WLAN)} > \beta \quad \text{---} \quad \text{(Formula 8)}$$

$$\text{- (BackhaulRateUl of operator WLAN)} > \text{(BackhaulRateUl of preferred WLAN)} + \alpha \quad \text{---} \quad \text{(Formula 9)}$$

$$\text{- (BackhaulRateUl of operator WLAN)} > \beta \quad \text{---} \quad \text{(Formula 10)}$$

When the WLAN 30 (operator WLAN) managed by the operator is not the WLAN 30 preferred by the user but the designated WLAN 30, the WLAN 30 preferred by the user is prioritized by a numerical value that the selection parameter indicates. When the above formula is satisfied, the UE 100 determines that it is preferable that the designated

8

WLAN 30, rather than the WLAN 30 preferred by the user, is selected. In this case, the UE 100 may decide, as the accommodation network, the designated WLAN 30. Alternatively, the UE 100 may start the operation for deciding the accommodation network, triggered by the above formula being satisfied.

The selection parameter may be a value by which it is not possible to select the WLAN 30, as the accommodation network, not preferred by the user. As a result, the WLAN 30 preferred by the user is selected all the time, and thus the user preference is taken into consideration.

The impossible value includes, for example, an infinity ($\infty$), a value equal to or more than the transmission power of the WLAN 30, and a value ($\geq$100%) equal to or more than a percent indicating the load status of the WLAN 30.

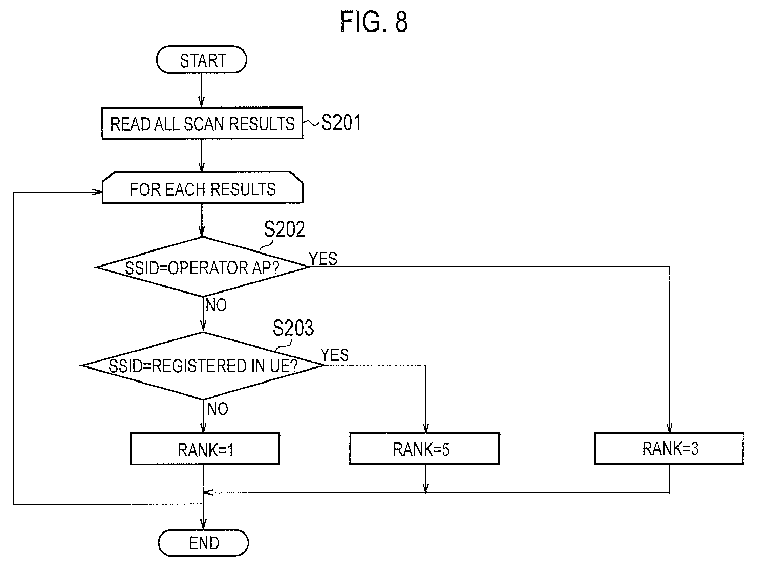

Thirdly, the UE 100 sets a priority (rank) having a predetermined value to prioritize the WLAN 30. This will be described by using Fig. 8, below. Fig. 8 is a flowchart for describing the prioritization of the WLAN 30 according to the first embodiment. It is noted that, in the following rank, the greater the value, the higher the priority.

As shown in Fig. 8, in step S201, the UE 100 reads out, from the memory 150, a result obtained by measuring the signal from the AP 300. The measurement result includes the identifier of the AP 300 (an SSID). The UE 100 executes a process of step S202, on the result of each AP 300.

In step S202, the UE 100 determines whether or not the identifier of the AP 300 obtained from the measurement is the identifier of the AP (Operator AP) managed by the operator. When determining that the identifier of the AP 300 is the identifier of the AP managed by the operator, the UE 100 sets the rank of the AP 300 to "3", and executes the process of step S202 on the unprocessed identifier of the AP 300 obtained from the measurement. On the other hand, when determining that the identifier of the AP 300 is not the identifier of the AP managed by the operator, the UE 100 executes a process of step S203.

In step S203, the UE 100 determines whether or not the identifier of the AP 300 obtained from the measurement is registered in the preference list. When the identifier of the AP 300 is registered in the preference list, the UE 100 sets the rank of the AP 300 to "5", and executes the process of step S202 on the unprocessed identifier of the AP 300 obtained from the measurement. On the other hand, when the identifier of the AP 300 is not registered in the preference list, the UE 100 sets the rank of the AP 300 to "1", and executes the process of step S202 on the unprocessed identifier of the AP 300 obtained from the measurement. When all the identifiers of the AP 300 obtained from the measurement are determined, the UE 100 ends the process.

Thus, when the rank is set to the AP 300 obtained from the measurement on the basis of the user preference, the UE 100 is capable of prioritizing the AP 300. As a result, when the accommodation network is selected, the user preference is taken into consideration, and thus, it is possible to select the appropriate WLAN 30.

Further, in the above-described first to third methods, when connecting with the WLAN 30 preferred by the user, the UE 100 may omit the prioritization of the WLAN 30 and omit the operation for deciding the accommodation network. As a result, the UE 100 is capable of maintaining the connection with the WLAN 30 preferred by the user.

[Second Embodiment]

Next, an operation sequence according to a second embodiment will be described. A description will be provided with a particular focus on a portion different from the above-described first embodiment, and a description of a similar portion will be omitted, where necessary. In the above-described first embodiment, the RAN Solution 1 and the RAN Solution 2 are described; in the second embodiment, the RAN Solution 3 will be described.

(1) Operation sequence 1

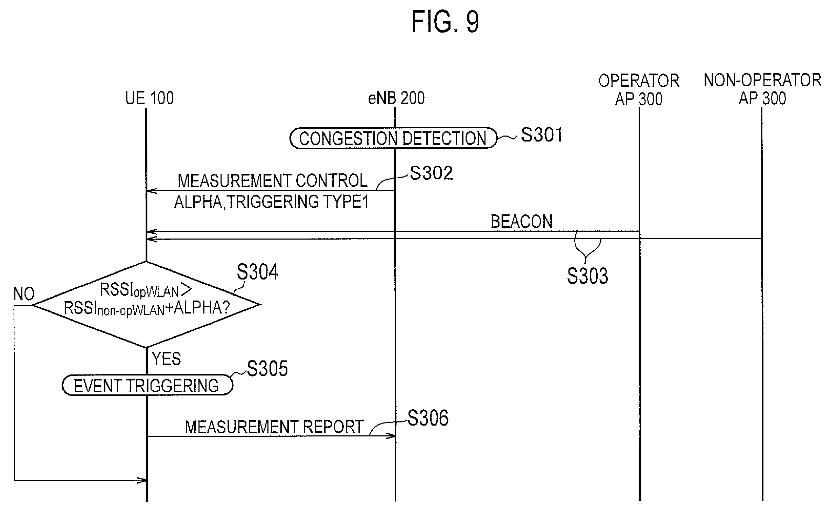

An operation sequence 1 will be described by using Fig. 9. Fig. 9 is a sequence diagram for describing the operation sequence 1 according to the second embodiment.

As shown in Fig. 9, in step S301, the eNB 200 detects that a congestion of a communication line is generated (Congestion detection). For example, the generation of the congestion is detected when a usage rate of a buffer capacity of the eNB 200 exceeds a threshold value.

In step S302, the eNB 200 transmits, to the UE 100 subject to offload, a WLAN measurement command (Measurement Control) to control a WLAN measurement. The WLAN measurement command includes WLAN control information. Further, the WLAN measurement command includes trigger information indicating a trigger by which a WLAN measurement report for reporting a result of the WLAN measurement is transmitted to the eNB 200.

Here, (Formula 1), (Formula 3), (Formula 5), (Formula 7), and (Formula 9) in the above-described first embodiment are of type in which the WLAN parameter acquired from each of the plurality of WLANs 30 is compared, and hence, called a type 1. On the other hand, (Formula 2), (Formula 4), (Formula 6), (Formula 8), and (Formula 10) in the above-described first embodiment are of type in which the WLAN parameter mainly from one WLAN 30 is compared with a threshold value, and is not compared with the other WLAN parameters, and hence, called a type 2.

Here, description proceeds on the assumption that the WLAN control information includes information indicating a threshold value α and information that triggers the type 1.

In step S303, the UE 100 searches (measures) the signal of the AP 300, and receives a beacon signal from an operator AP 300 that is the AP 300 managed by the operator and a non-operator AP 300 that is the AP 300 not managed by the operator.

In step S304, it is assumed that the UE 100 selects the formula (1), on the basis of information indicating the threshold value α [dB] and information that triggers the type 1.

The UE 100 uses the selected formula (1) to prioritize the WLAN 30 (AP 300) and determine whether the WLAN measurement report is necessary. Specifically, the UE 100 determines whether or not a received signal intensity of the operator AP 300 is larger than a value obtained by adding a threshold value to a received signal intensity of the non-operator AP 300. When determining that the formula (1) is satisfied, the UE 100 executes a process of step S305. On the other hand, when determining that the formula (1) is not satisfied, the UE 100 ends the process.

In step S305, the UE 100 detects, on the basis of trigger information included in the WLAN measurement command, an event that triggers the transmission of the WLAN measurement report (that is, a predetermined condition that serves as a trigger by which the WLAN measurement report is transmitted being satisfied).

In step S306, the UE 100 transmits the WLAN measurement report to report a result of the WLAN measurement, to the eNB 200. The WLAN measurement report includes, for example, an identifier indicating the WLAN 30 and the WLAN measurement result (a WLAN parameter acquired from the AP 300 such as a received power of the beacon signal and a load status of the AP 300).

(2) Operation sequence 2

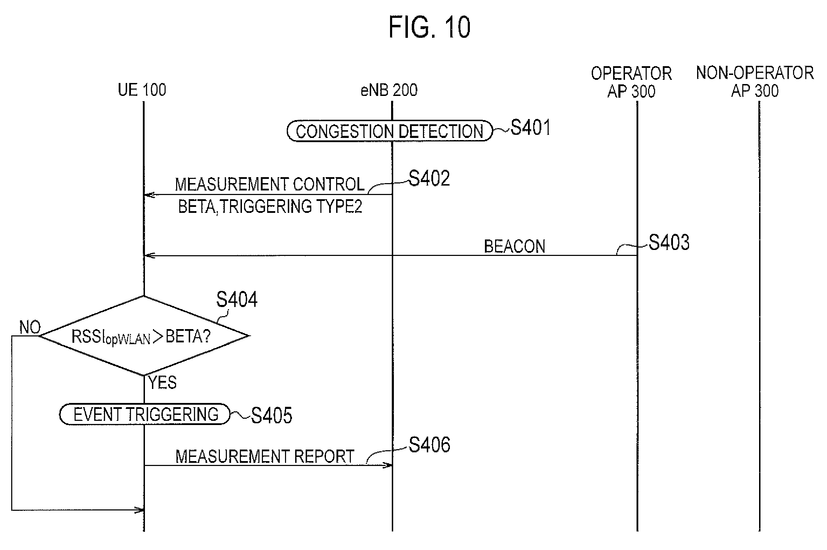

An operation sequence 2 will be described by using Fig. 10. Fig. 10 is a sequence diagram for describing the operation sequence 2 according to the second embodiment.

The operation sequence 2 is different from the operation sequence 1 in that the formula (2) of the type 2 is used to prioritize the WLAN 30 (AP 300).

In Fig. 10, steps S401 and S402 correspond to steps S301 and S302.

In step S402, the WLAN control information includes information indicating a threshold value β and information that triggers the type 2.

In step S403, the UE 100 receives the beacon signal from the operator AP 300.

In step S404, it is assumed that the UE 100 selects the formula (2), on the basis of information indicating the threshold value β [dBm] and information that triggers the type 2.

The UE 100 uses the selected formula (2) to prioritize the WLAN 30 (AP 300). Specifically, the UE 100 determines whether or not a received signal intensity of the operator AP 300 is larger than a value obtained by adding a threshold value. When determining that the formula (2) is satisfied, the UE 100 executes a process of step S405. On the other hand, when determining that the formula (2) is not satisfied, the UE 100 ends the process.

Steps S405 and S406 correspond to steps S305 and S306.

(3) Operation sequence 3

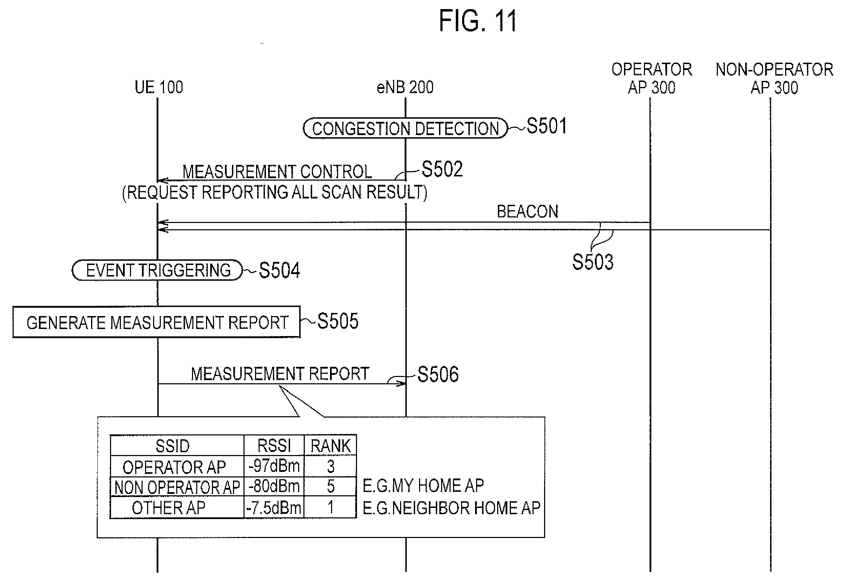

An operation sequence 3 will be described by using Fig. 11. Fig. 11 is a sequence diagram for describing the operation sequence 3 according to the second embodiment.

The operation sequence 3 is different from the operation sequence 1 in that the WLAN measurement report is performed. Further, the UE 100 includes the priority of the WLAN 30 (AP 300) into the WLAN measurement report. It is noted that in the operation sequence 3, a process corresponding to step S304 is not performed.

In Fig. 11, steps S501 to S504 correspond to steps S301 to S303 and S305. It is noted that in step S502, the eNB 200 may request a report of all the WLAN measurement results of the beacon signals received by the UE 100. Further, in step S504, when detecting an event by which the transmission of the WLAN measurement report is triggered, the UE 100 executes a process of step S505. Here, when the WLAN measurement result about the radio signal received from one or more APs 300 corresponding to at least any one of an identifier of the WLAN 30 (AP 300) included in the WLAN measurement command, an identifier of the WLAN 30 included in the WLAN control information (or an identifier in a WLAN identifier list), and an identifier of the WLAN 30 input by the user of the UE 100 (an identifier of the AP 300 in the preference list, for example) satisfies a predetermined condition that serves as a trigger for the transmission of the WLAN measurement report, the UE 100 may determine that the event is detected.

For example, when the WLAN measurement result satisfies at least either one of the following formulae (predetermined conditions), the UE 100 is capable of determining that the event is detected.

- ChannelUtilizationWLAN < $ThreshC_{hUtilWLAN, Low}$

- BackhaulRateDlWLAN > $Thresh_{BackhRateDLWLAN, High}$
- BackhaulRateUlWLAN > $Thresh_{BackhRateULWLAN, High}$
- BeaconRSSI > $Thresh_{BeaconRSSIWLAN, High}$

It is noted that "$ThreshC_{hUtilWLAN, Low}$", "$Thresh_{BackhRateDLWLAN, High}$", "$Thresh_{BackhRateULWLAN, High}$" and "$Thresh_{BeaconRSSIWLAN, High}$" are threshold values, and may be included in the WLAN control information (auxiliary information) and included in the WLAN measurement command.

In step S505, the UE 100 generates the WLAN measurement report.

Firstly, in much the same way as in the above-described first embodiment, the UE 100 sets the priority (rank) of the AP 300 to each AP 300 that receives the beacon signal. Further, rather than the numerical value as in the first embodiment, "High"/"Low" may be set as the priority of the AP 300. As a result, it is possible to represent the priority with 1-bit information. For the rank, the priority may be represented with 2-bit information such as "0", "1", "2", and "3".

Further, the UE 100 may set, to the higher priority, the AP 300 (home AP) profile-saved in the UE 100 by a user input. Further, during any timing such as during measurement of the beacon signal, during generation of the WLAN measurement report, or within a predetermined period, the UE 100 may set, to the higher priority, the AP manually selected by the user, and may set, to the higher priority, the AP manually selected with reference to a past manipulation history.

Further, the UE 100 may set, to the lower priority, the AP 300 having the acquired WLAN parameter (an RSSI, for example) falling below a threshold value. Further, when the AP 300 from which the radio signal is transmitted is designated, as a target (candidate) of a cellular/WLAN aggregation, from the cellular RAN (eNB 200), the UE 100 may set, to the higher priority, the AP 300. It is noted that the cellular/WLAN aggregation is a communication scheme in which a traffic (user data) belonging to an identical or different data bearer is exchanged by using both the cellular communication and the WLAN communication.

As shown in Fig. 11, the UE 100 includes, for example, the identifier (SSID) of the WLAN 30, the received signal intensity (RSSI) of the WLAN 30, and the priority (Rank) of the WLAN 30, into the WLAN measurement report. The UE 100 may include another information (load status of the AP 300) into the WLAN measurement report. It is noted that the UE 100 performs the WLAN measurement report not only on the AP 300 designated from the cellular RAN but also on each AP 300 that receives the beacon signal. That is, the UE 100 is capable of including, into the WLAN measurement report, the WLAN measurement result of each AP 300 that does not satisfy a predetermined condition that serves as a trigger for the transmission of the WLAN measurement report. Therefore, the UE 100 may include, for example, the WLAN measurement result of the AP 300 having the acquired WLAN parameter (an RSSI, for example) exceeding a threshold value (that is, the acquired WLAN parameter), into the WLAN measurement report, and may include only the priority of the AP 300 into the WLAN measurement report. Alternatively, the UE 100 may include the WLAN measurement result of all the APs 300 that receive the beacon signal, into the WLAN measurement report. Thus, when the UE 100 includes the WLAN measurement result of each AP 300 that does not satisfy a predetermined condition, into the WLAN measurement report, the eNB 200 is capable of knowing a radio environment of the UE 100 in the WLAN communication. As a result, the eNB 200 is capable of selecting an appropriate WLAN 30.

Further, the eNB 200 that receives the WLAN measurement report is capable of transmitting, to the UE 100, a Steering command (offload command) to instruct execution of an offload, on the basis of the WLAN measurement report (in particular, the priority), the load of RAN, and the like. The eNB 200 instructs the execution of the offload on the basis of the priority included in the WLAN measurement report, and thus, when an accommodation network is selected, the user preference is taken into consideration. As a result, an appropriate WLAN 30 is selected.

(4) Operation sequence 4

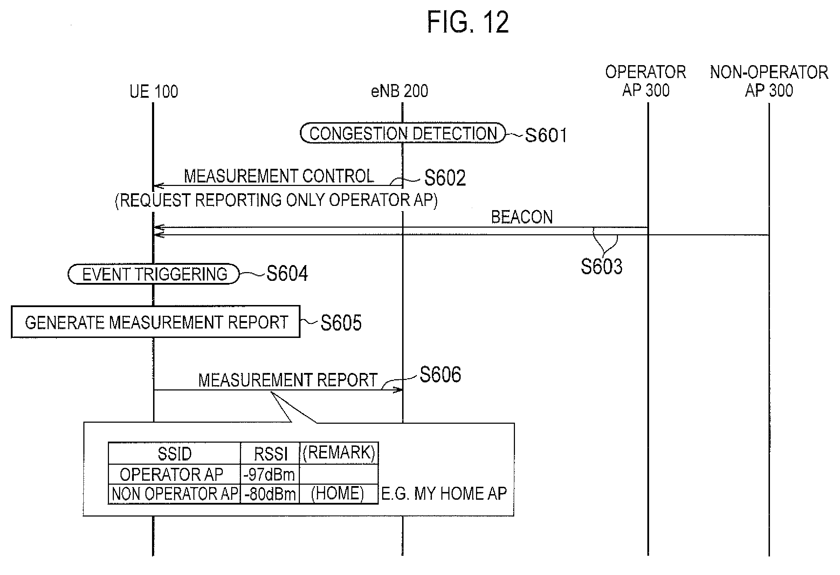

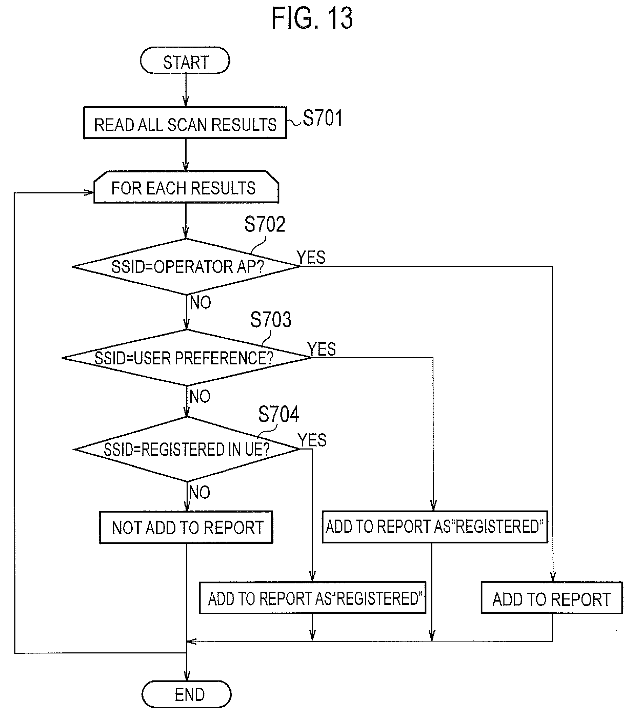

An operation sequence 4 will be described by using Fig. 12 and Fig. 13. Fig. 12 is a sequence diagram for describing the operation sequence 4 according to the second embodiment. Fig. 13 is a flowchart for selecting the AP 300 to be included by the UE 100 in the WLAN measurement report.

The operation sequence 4 differs from the operation sequence 3 in that as a precondition, the UE 100 performs the WLAN measurement report about the AP 300 designated from the cellular RAN. Therefore, the UE 100 does not perform, in principle, the WLAN measurement report about an AP 100 other than the AP 300 designated from the cellular RAN. However, in the operation sequence 4, as described below, the UE 100 is capable of exceptionally performing the WLAN measurement report about the AP 100 other than the AP 300 designated from the cellular RAN. It is noted that the designated AP 300 may be the AP 300 designated (set) from the eNB 200, and the AP 300 designated the ANDSF server 600.

In Fig. 12, steps S601 to S604 correspond to steps S501 to S504.

In step S605, the UE 100 generates the WLAN measurement report. The UE 100 includes information on the AP 300 not designated from the cellular RAN and preferred by the user, into the WLAN measurement report. Specifically, the UE 100 performs a process shown in Fig. 13.

In Fig. 13, step S701 corresponds to step S201. The UE 100 executes a process of step S702, on a measurement result of each AP 300.

In step S702, the UE 100 determines whether or not the identifier of the AP 300 obtained from the measurement is the identifier of the operator AP. When determining that the identifier of the AP 300 is the identifier of the operator AP, the UE 100 includes (the identifier of) the AP into the WLAN measurement report, and executes the process of step S702 on the unprocessed identifier of the AP 300 obtained from the measurement. On the other hand, when determining that the identifier of the AP 300 is not the identifier of the operator AP, the UE 100 executes a process of step S703.

It is noted that when the identifier of the AP 300 is included in the WLAN measurement command in step S602, the UE 100 may determine whether or not the identifier of the AP 300 obtained from the measurement matches the identifier of the AP 300 included in the WLAN measurement command. In this case, when the identifier of the AP 300 obtained from the measurement is not the identifier of the operator AP, the UE 100 executes the process of step S703. It is noted that the identifier of the AP 300 included in the WLAN measurement command may not necessarily be the identifier of the operator AP. In this case, in the WLAN measurement command, the identifier of the AP 300 and a flag indicating whether or not the identifier is the identifier of the operator AP may be associated. When the WLAN measurement command does not include the flag, the UE 100 may determined that the identifier of the AP 300 included in the WLAN measurement command is the identifier of the operator AP.

In step S703, the UE 100 determines whether or not the identifier of the AP 300 is of user preference. Specifically, the UE 100 determines whether or not the identifier of the AP 300 matches the identifier of the WLAN 30 registered in the preference list. When determining that the AP 300 is of user preference, the UE 100 includes (the identifier of) the AP, as the "AP of user preference", into the WLAN measurement report, and executes the process of step S702 on the unprocessed identifier of the AP 300 obtained from the measurement. On the other hand, when determining that the AP 300 is not of user preference, the UE 100 executes a process of step S704.

In step S704, the UE 100 determines whether or not the identifier of the AP 300 is registered in the UE 100. Specifically, the UE 100 determines whether or not the identifier of the AP 300 matches the identifier of the WLAN 30 registered in, except for the preference list, the memory 150 of the UE 100.

Here, the identifier of the WLAN 30 registered in, except for the preference list, the memory 150 of the UE 100 is, for example, the identifier of the WLAN 30 registered in the memory 150 as a result of a past connection of the UE 100, and the identifier of the WLAN 30 not registered in the preference list.

When determining that the AP 300 is the registered WLAN 30, the UE 100 includes (the identifier of) the AP, as a "registered AP", into the WLAN measurement report, and executes the process of step S702 on the unprocessed identifier of the AP 300 obtained from the measurement. On the other hand, when determining that the AP 300 is not the registered WLAN 30, the UE 100 does not include (the identifier of) the AP into the WLAN measurement report.

When all the identifiers of the AP 300 obtained from the measurement are determined, the UE 100 ends the process.

Returning to the description of Fig. 12, the UE 100 may include information (that the AP 300 is a home AP, for example) indicating a reason why the AP 300 not designated from the cellular RAN is included into the WLAN measurement report, into the WLAN measurement report.

The eNB 200 that receives the WLAN measurement report transmits, to the UE 100, a Steering command (offload command) to instruct execution of an offload, on the basis of the WLAN measurement report (in particular, the information on the AP 300 not designated), the load of the RAN, and the like. The eNB 200 instructs the execution of the offload on the basis of the information on the AP 300 not designated, and thus, when an accommodation network is selected, the user preference is taken into consideration. As a result, an appropriate WLAN 30 is selected.

[Other Embodiments]

As described above, the present invention has been described with the embodiments. However, it should not be understood that those descriptions and drawings constituting a part of the present disclosure limit the present invention. From this disclosure, a variety of alternate embodiments, examples, and applicable techniques will become apparent to one skilled in the art.

In the above-described embodiment, the selection parameters ($\alpha$, $\beta$) are included in the WLAN control information; however, this is not limiting. The selection parameters may be included as a part of the selection rule for the accommodation network.

Further, the selection parameter may be a parameter used all the time when the UE 100 prioritizes the WLAN 30, and may be that not used under a specific condition such as when the priority is the same, for example.

In the operation sequences 3 and 4 according to the above-described second embodiment, the UE 100 may transmit the request for the WLAN measurement command, to the eNB 200. For example, when the identifier of the WLAN 30 registered in the preference list is not included in the WLAN measurement command, the UE 100 may request the WLAN measurement command. In the request for the WLAN measurement command, the identifier of the WLAN 30 registered in the preference list may be included. Further, the UE 100 may include an indication that the WLAN 30 registered in the preference list is included into the WLAN measurement report, into a response to the WLAN measurement command.

In the above-described first embodiment, the WLAN 30 is prioritized; however, the WLAN measurement report is not performed. However, in the above-described first embodiment, the WLAN measurement report may be performed. In this case, an operation in much the same way as in the WLAN measurement report in the above-described second embodiment may be performed.

Further, in the above-described second embodiment, the WLAN measurement report is performed; however, the WLAN measurement report may not necessarily be performed. For example, the eNB 200 transmits the offload command (Steering Command) instructing the execution of the offload, to the UE 100. The offload command includes the identifier of the WLAN 30 (AP 300), that is, a steering target, and selection parameters. The UE 100 that receives the offload command may prioritize the WLAN 30 on the basis of the identifier of the WLAN 30, that is, the steering target, the selection parameters $(\alpha, \beta)$, and the result of the WLAN measurement. The UE 100 may decide the WLAN 30, that is, the final steering target, on the basis of the prioritization result of the WLAN 30.

In each of the above-described embodiments, as one example of a cellular communication system, the LTE system is described; however, the present invention is not limited to the LTE system, and the present invention may be applied to systems other than the LTE system. In each of the above-described embodiments, the operation performed by the eNB 200 (base station) may be performed by another RAN node (for example, an RNC) instead of the base station.

It is noted that the entire content of Japanese Patent Application No. 2013-264612 (filed on December 20, 2013) is incorporated in the present specification by reference.

## INDUSTRIAL APPLICABILITY

As described above, the communication control method according to the present embodiment is capable of selecting an appropriate connection target when an access network for accommodating a traffic of a user terminal is selected, and thus, useful in a mobile communication field.

## Claims

1. A communication control method used in a communication system in which an access network for accommodating a traffic of a user terminal is capable of being selected, the method comprising the steps of:

   (A) receiving, by the user terminal, identification information indicating a predetermined wireless LAN from a cellular RAN; and
   (B) prioritizing, by the user terminal, the predetermined wireless LAN indicated by the identification information, as a connection target used after selecting the access network, wherein

   in the (B), when the predetermined wireless LAN is not a wireless LAN preferred by a user of the user terminal, the user terminal prioritizes the wireless LAN preferred by the user over the predetermined wireless LAN.

2. The communication control method according to claim 1, further comprising:

   receiving, by the user terminal, from the cellular RAN, a selection parameter by which a wireless LAN estimated to be preferred by the user is prioritized over a wireless LAN assumed not to be preferred by the user, wherein
   in the (B), the user terminal prioritizes, on the basis of the selection parameter, the wireless LAN preferred by the user.

3. The communication control method according to claim 2, further comprising:

   starting an operation for selecting the access network, when the user terminal determines on the basis of the selection parameter that it is preferable that a wireless LAN other than the wireless LAN preferred by the user is selected as the connection target.

4. The communication control method according to claim 1, wherein
   the user terminal omits the (B) when connecting with the wireless LAN preferred by the user.

**5.** The communication control method according to claim 2, wherein
the selection parameter is a value by which it is not possible to select, as the connection target, the wireless LAN not preferred by the user.

**6.** The communication control method according to claim 1, wherein
the wireless LAN preferred by the user is a wireless LAN not managed by an operator, and
the wireless LAN not preferred by the user is a wireless LAN managed by an operator.

**7.** A communication control method used in a communication system in which an access network for accommodating a traffic of a user terminal is capable of being selected, the method comprising:

selecting on the basis of a selection rule for an accommodation network, by the user terminal, the access network to switch a connection target in order to accommodate a traffic of the user terminal to the selected access network, wherein
in the selecting, when connecting with a wireless LAN preferred by a user, the user terminal prioritizes the connection with the wireless LAN preferred by the user over the switching of the connection target.

**8.** A communication control method used in a communication system in which an access network for accommodating a traffic of a user terminal is capable of being selected, the method comprising the steps of:

(A) receiving, by the user terminal, identification information indicating a predetermined wireless LAN from a cellular LAN; and
(B) setting, by the user terminal, the predetermined wireless LAN indicated by the identification information, to a candidate connection target used after selecting the access network, wherein

in the (B), the user terminal eliminates, on the basis of a user preference, the predetermined wireless LAN from the candidate connection target used after selecting the access network.

**9.** The communication control method according to claim 8, further comprising: registering information indicating the user preference into the user terminal, wherein
in the (B), when the user terminal determines on the basis of the information indicating the registered user preference that the predetermined wireless LAN is the wireless LAN not preferred by the user, the predetermined wireless LAN is eliminated from the candidate connection target.

**10.** The communication control method according to claim 8, wherein
in the (B), the user terminal includes, on the basis of the user preference, another wireless LAN different from the predetermined wireless LAN into the candidate connection target.

**11.** The communication control method according to claim 8, wherein
the user preference indicates that a wireless LAN not managed by an operator is prioritized over a wireless LAN managed by an operator.

**12.** A communication control method used in a communication system in which an access network for accommodating a traffic of a user terminal is capable of being selected, the method comprising the steps of:

acquiring, by the user terminal, a predetermined parameter from a wireless LAN; and
transmitting, by the user terminal, a report on the acquired predetermined parameter, to the cellular RAN, wherein
in the transmitting, the user terminal includes a priority of the wireless LAN decided on the basis of a user preference, into the report.

**13.** A communication control method used in a communication system in which an access network for accommodating a traffic of a user terminal is capable of being selected, the method comprising the steps of:

receiving, by the user terminal, identification information indicating a predetermined wireless LAN from the cellular RAN; and
transmitting, by the user terminal, a report on a predetermined parameter acquired from the predetermined wireless LAN, to the cellular RAN, wherein
in the transmitting, the user terminal includes information on a predetermined parameter acquired from another wireless LAN different from the predetermined wireless LAN into the report.

14. A communication control method used in a communication system in which an access network for accommodating a traffic of a user terminal is capable of being selected, the method comprising the steps of:

measuring, by the user terminal, a radio signal from a plurality of wireless LANs; and
transmitting, by the user terminal, a report on a measurement result to the cellular RAN, when the measurement result of the radio signal from at least one wireless LAN out of the plurality of wireless LANs satisfies a predetermined condition, wherein
in the transmitting, the user terminal includes, into the report, not only the measurement result of the radio signal that satisfies the predetermined condition but also the measurement result of the radio signal that does not satisfy the predetermined condition, and transmits the report.

15. The communication control method according to claim 14, wherein
in the transmitting, the user terminal includes all measurement results of the plurality of wireless LANs, into the report.

16. A communication control method used in a communication system in which an access network for accommodating a traffic of a user terminal is capable of being selected, the method comprising the steps of:

receiving, by the user terminal, identification information indicating a wireless LAN from a cellular RAN or an ANDSF (Access Network Discovery and Selection Function) server;
measuring, by the user terminal, a radio signal from a predetermined wireless LAN; and
transmitting, by the user terminal, a report on a measurement result of the radio signal from the predetermined wireless LAN, to the cellular RAN, wherein
in the transmitting, the user terminal does not transmit the report when the predetermined wireless LAN does not match the wireless LAN indicated by the identification information.

# FIG. 1

# FIG. 2

# FIG. 3

FIG. 4

300

AP

340

320

311

301

NETWORK INTERFACE

PROCESSOR

WLAN COMMUNICATION UNIT

MEMORY 330

# FIG. 5

FIG. 6

EP 3 086 603 A1

# FIG. 7

UE 100                                    eNB 200

SYSTEM INFORMATION
OR RRC MESSAGE                    S101

S102

SET PRIORITIES

# FIG. 8

START

READ ALL SCAN RESULTS —— S201

FOR EACH RESULTS

S202
SSID=OPERATOR AP? —— YES

NO

S203
SSID=REGISTERED IN UE? —— YES

NO

RANK=1     RANK=5     RANK=3

END

EP 3 086 603 A1

# FIG. 9

# FIG. 10

OPERATOR AP 300   NON-OPERATOR AP 300

UE 100     eNB 200

CONGESTION DETECTION — S401

MEASUREMENT CONTROL — S402
BETA, TRIGGERING TYPE2

BEACON — S403

S404
NO — RSSI$_{opWLAN}$ > BETA?

YES

EVENT TRIGGERING — S405

MEASUREMENT REPORT — S406

EP 3 086 603 A1

# FIG. 11

| SSID | RSSI | RANK | |
|---|---|---|---|
| OPERATOR AP | -97dBm | 3 | |
| NON OPERATOR AP | -80dBm | 5 | E.G.MY HOME AP |
| OTHER AP | -7.5dBm | 1 | E.G.NEIGHBOR HOME AP |

EP 3 086 603 A1

# FIG. 12

OPERATOR NON-OPERATOR
AP 300      AP 300

UE 100                    eNB 200

CONGESTION DETECTION —S601

MEASUREMENT CONTROL —S602
(REQUEST REPORTING ONLY OPERATOR AP)

BEACON

S603

EVENT TRIGGERING —S604

GENERATE MEASUREMENT REPORT —S605

MEASUREMENT REPORT —S606

| SSID | RSSI | (REMARK) | |
|---|---|---|---|
| OPERATOR AP | -97dBm | | |
| NON OPERATOR AP | -80dBm | (HOME) | E.G. MY HOME AP |

EP 3 086 603 A1

# FIG. 13

```
                    START

                       ↓

            READ ALL SCAN RESULTS ⌐S701

                       ↓

            FOR EACH RESULTS ─────────────────┐
                       ↓                       │
                    S702                       │
                       ↓                       │
              SSID=OPERATOR AP?   ─YES──────────────────────────┐
                       │NO                     │                 │
                       ↓                       │                 │
                    S703                       │                 │
                       ↓                       │                 │
             SSID=USER PREFERENCE?  ─YES──────────┐             │
                       │NO                     │    │            │
                       ↓                       │    │            │
                    S704                       │    │            │
                       ↓                       │    │            │
             SSID=REGISTERED IN UE?  ─YES──┐   │    │            │
                       │NO                 │   │    │            │
                       ↓                   │   │    ↓            │
              NOT ADD TO REPORT            │   │  ADD TO REPORT AS "REGISTERED"
                       │                   │   │    │            │
                       │                   ↓   ↓    │            ↓
                       │        ADD TO REPORT AS "REGISTERED"   ADD TO REPORT
                       │                   │        │            │
                       │←──────────────────┴────────┴────────────┘
                       ↓

                     END
```

## INTERNATIONAL SEARCH REPORT

International application No.

PCT/JP2014/083573

A. CLASSIFICATION OF SUBJECT MATTER
*H04W48/18*(2009.01)i, *H04W48/16*(2009.01)i, *H04W48/20*(2009.01)i, *H04W88/06*
(2009.01)i

According to International Patent Classification (IPC) or to both national classification and IPC

B. FIELDS SEARCHED

Minimum documentation searched (classification system followed by classification symbols)
H04W4/00-H04W99/00

Documentation searched other than minimum documentation to the extent that such documents are included in the fields searched
Jitsuyo Shinan Koho          1922-1996    Jitsuyo Shinan Toroku Koho    1996-2015
Kokai Jitsuyo Shinan Koho     1971-2015    Toroku Jitsuyo Shinan Koho    1994-2015

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2011/149533 A1 (HEADWATER PARTNERS I LLC), 01 December 2011 (01.12.2011), paragraphs [0049], [0052], [0058], [0060], [0070], [0088] to [0091], [0121], [0123], [0127] to [0129], [0135], [0137], [0167] to [0169]; fig. 2, 7, 8 & JP 2013-530640 A          & US 2011/0320588 A1 & CA 2800184 A          & CN 103038651 A | 1-16 |
| A | WO 2009/132095 A1 (RESEARCH IN MOTION LTD.), 29 October 2009 (29.10.2009), paragraphs [0023] to [0028], [0030], [0032] to [0035], [0037], [0039] to [0042] & JP 2011-523250 A          & US 2009/0270117 A1 & EP 2112786 A1          & CA 2722433 A & CN 102017511 A | 1-16 |

[X] Further documents are listed in the continuation of Box C.          [ ] See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    16 March 2015 (16.03.15) | Date of mailing of the international search report<br>    24 March 2015 (24.03.15) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (July 2009)

**INTERNATIONAL SEARCH REPORT**

International application No.

PCT/JP2014/083573

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2012-23506 A  (Sony Corp.),<br>02 February 2012 (02.02.2012),<br>paragraphs [0031], [0032], [0034], [0035],<br>[0038], [0048] to [0051]<br>(Family: none) | 1-16 |

## INTERNATIONAL SEARCH REPORT

| | |
|---|---|
| International application No. | |
| | PCT/JP2014/083573 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

    (Invention 1) claims 1-11
    A communication control method provided with a step in which a user terminal determines and connects a wireless LAN to be connected preferentially by a wireless LAN desired by a user or the wireless LAN desired by the user and a selection parameter.
    (Invention 2) claims 12-16
    A communication control method provided with a step in which a user terminal reports a parameter acquired from a wireless LAN to a cellular RAN.

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.    Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013264612 A

**Non-patent literature cited in the description**

- TR 37.834 V1.0.0. *3GPP technical report,* August 2013